# EUROPEAN PATENT SPECIFICATION

(11) **EP 2 527 751 B1**
(45) Date of publication and mention of the grant of the patent: **07.08.2019**
(21) Application number: 10843803.7
(22) Date of filing: 19.01.2010
(51) Int. Cl.: F24F 5/00, F24H 1/00, F25B 29/00, F24F 11/41, F25B 13/00, F25B 7/00, F24D 11/02, F24F 3/06, F24F 140/50

(54) **AIR CONDITIONING-HOT WATER SUPPLY COMBINED SYSTEM**
KOMBINATIONSSYSTEM AUS HEISSWASSERVERSORGUNG UND KLIMAANLAGE
SYSTÈME COMBINÉ DE CLIMATISATION ET D'ALIMENTATION EN EAU CHAUDE

(43) Date of publication of application: 28.11.2012
(73) Proprietor: Mitsubishi Electric Corporation, Tokyo 100-8310 (JP)
(72) Inventor: YABUUCHI, Hironori, Nagoya Aichi 461-8670 (JP); KOGE, Hirofumi, Tokyo 100-8310 (JP)
(74) Representative: Pfenning, Meinig & Partner mbB
(86) International application number: PCT/JP2010/000249
(87) International publication number: WO 2011/089637

(56) References cited:
- WO-A1-2009/098751
- WO-A1-2009/122476
- WO-A1-2009/122477
- JP-A- 2004 132 647
- JP-A- 2004 132 647
- JP-A- 2004 245 535
- JP-A- 2006 010 212

## Description

### Technical Field

The present invention relates to an integrated air-conditioning and hot-water system that is equipped with a heat pump cycle and can simultaneously provide an air-conditioning load and a hot water load, and particularly, to an integrated air-conditioning and hot-water system that allows stable supply of a heat source throughout the year.

### Background Art

In the related art, there is an integrated air-conditioning and hot-water system that can simultaneously provide a cooling load, a heating load, and a hot water load with a unitary refrigeration cycle. One proposed example is "a multifunctional heat pump system including a single compressor and constituted of a refrigerant circuit that connects the compressor, an outdoor heat exchanger, an indoor heat exchanger, a cooling-energy storage tank, and a hot-water heat exchanger, wherein the system forms a refrigeration cycle that allows individual cooling, heating, hot-water-supply, heating-energy storage, and cooling-energy storage operations and a multi-operation of these operations by switching the flow of refrigerant to the respective heat exchangers" (for example, see Patent Literature 1).

There is also an integrated air-conditioning and hot-water system that can simultaneously provide a high-temperature-water-supply function and an indoor air-conditioning function with a binary refrigeration cycle. One proposed example is "a heat pump hot water system including a low-stage-side refrigerant circuit through which a first refrigerant flows, the low-stage-side refrigerant connecting a first compressor, a refrigerant distributing device, a first heat exchanger, a second heat exchanger, a first throttle device, an outdoor heat exchanger, a four-way valve, and the first compressor in this order, as well as connecting the four-way valve and the first compressor in this order from the refrigerant distributing device to between the second heat exchanger and the first throttle device; a high-stage-side refrigerant circuit through which a second refrigerant flows, the high-state-side refrigerant circuit connecting a second compressor, a condenser, a third throttle device, the first heat exchanger, and the second compressor in this order; and a hot-water path through which hot water flows, the hot-water path connecting the second heat exchanger and the condenser in this order" (for example, see Patent Literature 2).

### Citation List

### Patent Literature

Patent Literature 1: Japanese Unexamined Patent Application Publication No. 11-270920 (pages 3 to 4, Fig. 1)
Patent Literature 2: Japanese Unexamined Patent Application Publication No. 4-263758 (pages 2 to 3, Fig. 1)

JP 2004132647 A discloses a hot water supplier with a hot water supplying refrigerant circuit that comprises a compressor, first heat exchanger, an expansion mechanism, and a second heat exchanger, which are successively connected and filled with a carbon dioxide refrigerant. The first heat exchanger consists of a heat water generating heat exchanger, the second heat exchanger consists of a cascade heat exchanger and the hot water supplier. The second heat exchanger is connected to the refrigerant circuit of an air-conditioning device or the like to perform a binary heat pump cycle operation, where the frosting of the second heat exchanger is prevented.

### Summary of Invention

### Technical Problem

The multifunctional heat pump system discussed in Patent Literature 1 simultaneously provides a cooling load, a heating load, and a hot water load with a unitary refrigeration cycle, that is, a single refrigeration cycle. However, in such a system, because the temperature of a heat rejecting process for heating water and the temperature of a heat rejecting process for heating operation are substantially the same, it is not possible to provide a high-temperature-water supply load during cooling operation, which is a problem in that stable heating energy cannot be supplied throughout the year. In addition, with regard to a plurality of use requests in such a system, since the required number of air conditioning apparatuses and hot-water apparatuses equals the number of use requests, there is a problem in that the design load and the investing load increase when building the system.

The heat pump hot water system discussed in Patent Literature 2 simultaneously provides a cooling load, a heating load, and a hot water load with a binary refrigeration cycle, that is, two refrigeration cycles. However, in such a system, the refrigerant circuit used for performing air-conditioning with an indoor unit and the refrigerant circuit used for performing hot water supply are managed differently. Thus, it is not possible to simply add a hot-water function in place of the indoor unit, which is a problem in that the system cannot be readily incorporated into an existing air-conditioning apparatus. Furthermore, with regard to a plurality of use requests in such a system, since the required number of air conditioning apparatuses and hot-water apparatuses equals the number of use requests, as in the system discussed in Patent Literature 1, there is a problem in that the design load and the investing load increase when building the system.

The invention has been made to solve the aforementioned problems, and an object thereof is to provide an integrated air-conditioning and hot-water system that can simultaneously provide an air-conditioning load and a hot water load and that allows stable supply of a heat source throughout the year by simultaneously controlling a plurality of hot water loads.

### Solution to Problem

An integrated air-conditioning and hot-water system according to the invention is defined by claim 1.

### Advantageous Effects of Invention

With a refrigeration cycle system according to the invention, a cooling load and a heating load performed by a plurality of use-side units can be balanced, thereby achieving operation with optimal energy efficiency throughout the year.

### Brief Description of Drawings

Fig. 1 is a refrigerant circuit diagram illustrating an example of a refrigerant circuit configuration of an integrated air-conditioning and hot-water system according to an embodiment not part of the invention.
Fig. 2 schematically illustrates a circuit configuration for describing another explanatory embodiment of a hot water load not part of the invention.
Fig. 3 schematically illustrates an installation example of the integrated air-conditioning and hot-water system according to an embodiment not part of the invention.
Fig. 4 is a schematic cross-sectional view illustrating an example of a cross-sectional configuration of a freeze protection water pipe.
Fig. 5 is a graph illustrating energy efficiency when cooling operation and heating operation are simultaneously performed. It illustrates an embodiment of the invention.
Fig. 6 illustrates an example of the structure of an outdoor heat exchanger.

### Description of Embodiment

An embodiment not part of the invention will be described below with reference to the drawings.

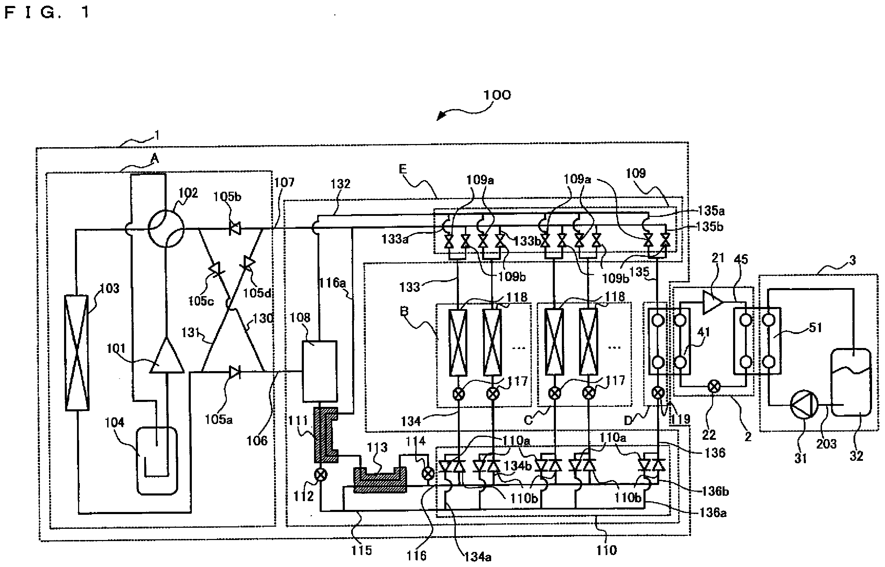

Fig. 1 is a refrigerant circuit diagram illustrating an example of a refrigerant circuit configuration of an integrated air-conditioning and hot-water system 100 according to said embodiment. The refrigeration circuit configuration and the operation of the integrated air-conditioning and hot-water system 100 will be described with reference to Fig. 1. The integrated air-conditioning and hot-water system 100 is installed in a building, an apartment, a hotel, or the like and utilizes a refrigeration cycle (heat pump cycle) for circulating a refrigerant (air-conditioning refrigerant) so as to be capable of simultaneously supplying a cooling load, a heating load, and a hot water load. In the following figures including Fig. 1, the dimensional relationships among components may differ from the actual dimensional relationships.

The integrated air-conditioning and hot-water system 100 according to Embodiment at least includes an air-conditioning refrigeration cycle 1, a hot-water-supply refrigeration cycle 2, and a hot water load 3. The air-conditioning refrigeration cycle 1 and the hot-water-supply refrigeration cycle 2 exchange heat in a refrigerant-refrigerant heat exchanger 41, and the hot-water-supply refrigeration cycle 2 and the hot water load 3 exchange heat in a heat medium-refrigerant heat exchanger 51, without causing the refrigerants and water to be mixed.

### [Air-Conditioning Refrigeration Cycle 1]

The air-conditioning refrigeration cycle 1 is constituted of a heat source unit A, an indoor unit B serving as, for example, the cooling load, an indoor unit C serving as, for example, the heating load, a hot-water heat-source circuit D as a heat source for the hot-water-supply refrigeration cycle 2, and a relay unit E. The indoor unit B, the indoor unit C, and the hot-water heat-source circuit D are connected in parallel to the heat source unit A via the relay unit E. The relay unit E installed between the heat source unit A and each of the indoor unit B, the indoor unit C, and the hot-water heat-source circuit D switches the flow of the air-conditioning refrigerant so as to allow the indoor unit B, the indoor unit C, and the hot-water heat-source circuit D to exhibit their functions.

### [Heat Source Unit A]

The heat source unit A has a function of supplying heating energy or cooling energy to the indoor unit B, the indoor unit C, and the hot-water heat-source circuit D via the relay unit E. In the heat source unit A, an air-conditioning compressor 101, a four-way valve 102 serving as flow switching means, an outdoor heat exchanger (heat source side heat exchanger) 103, and an accumulator 104 are installed and connected in series. In the heat source unit A, an air-sending device, such as a fan, for supplying air to the outdoor heat exchanger 103 may be provided at a position near the outdoor heat exchanger 103.

The air-conditioning compressor 101 takes in the air-conditioning refrigerant and compresses the air-conditioning refrigerant to a high-temperature, high-pressure state. The four-way valve 102 switches the flow of the air-conditioning refrigerant. The outdoor heat exchanger 103 functions as an evaporator or a radiator (condenser) and exchanges heat between the air supplied from the air-sending device (not shown) and the air-conditioning refrigerant so as to evaporate and gasify or condense and liquefy the air-conditioning refrigerant. The accumulator 104 is disposed at a suction side of the air-conditioning compressor 101 and retains excess air-conditioning refrigerant. The accumulator 104 may be a container that can retain the excess air-conditioning refrigerant.

In the heat source unit A, a check valve 105a that allows the air-conditioning refrigerant to flow only in a predetermined direction (a direction from the heat source unit A toward the relay unit E) is provided in a high-pressure-side connection pipe 106 between the outdoor heat exchanger 103 and the relay unit E, and a check valve 105b that allows the air-conditioning refrigerant to flow only in a predetermined direction (a direction from the relay unit E toward the heat source unit A) is provided in a low-pressure-side connection pipe 107 between the four-way valve 102 and the relay unit E.

The high-pressure-side connection pipe 106 and the low-pressure-side connection pipe 107 are connected to each other via a first connection pipe 130, which connects the downstream side of the check valve 105a and the downstream side of the check valve 105b, and also via a second connection pipe 131, which connects the upstream side of the check valve 105a and the upstream side of the check valve 105b. The first connection pipe 130 is provided with a check valve 105c that allows the air-conditioning refrigerant to flow only from the low-pressure-side connection pipe 107 toward the high-pressure-side connection pipe 106. The second connection pipe 131 is similarly provided with a check valve 105d that allows the air-conditioning refrigerant to flow only from the low-pressure-side connection pipe 107 toward the high-pressure-side connection pipe 106.

### [Indoor Unit B and Indoor Unit C]

The indoor unit B and the indoor unit C each function as the heating load or the cooling load by receiving the heating energy or the cooling energy supplied from the heat source unit A. In each of the indoor unit B and the indoor unit C, air-conditioning expansion means 117 and indoor heat exchangers (use-side heat exchangers) 118 are installed and connected in series. In the shown example, in each of the indoor unit B and the indoor unit C, two air-conditioning expansion means 117 are installed in parallel and two indoor heat exchangers 118 are installed in parallel. In each of the indoor unit B and the indoor unit C, an air-sending device, such as a fan, for supplying air to the indoor heat exchangers 118 may be provided near the indoor heat exchangers 118.

According to the relay unit E, for example, the indoor unit B is set to serve as the cooling load, and the indoor unit C is set to serve as the heating load. For the sake of convenience, connection pipes that connect the relay unit E to the indoor heat exchangers 118 will be referred to as connection pipes 133, and connection pipes that connect the relay unit E to the air-conditioning expansion means 117 will be referred to as connection pipes 134.

Each air-conditioning expansion means 117 functions as a pressure reducing valve or an expansion valve and decompresses and expands the air-conditioning refrigerant. The air-conditioning expansion means 117 may be of a type whose opening degree is variably controllable, such as minute flow control means using an electronic expansion valve or inexpensive refrigerant flow control means such as a capillary tube. The indoor heat exchangers 118 each function as a radiator (condenser) or an evaporator and perform heat exchange between the air supplied from the air-sending device (not shown) and the air-conditioning refrigerant so as to condense and liquefy or evaporate and gasify the air-conditioning refrigerant. The air-conditioning expansion means 117 and the indoor heat exchangers 118 are connected in series.

### [Hot-Water-Supply Heat-Source Circuit D]

The hot-water heat-source circuit D has a function of supplying the heating energy or the cooling energy from the heat source unit A to the hot-water-supply refrigeration cycle 2 via the refrigerant-refrigerant heat exchanger 41. In the hot-water heat-source circuit D, hot-water heat-source expansion means 119 and the refrigerant-refrigerant heat exchanger 41 are connected in series. Specifically, the air-conditioning refrigeration cycle 1 and the hot-water-supply refrigeration cycle 2 are cascade-connected to each other via the refrigerant-refrigerant heat exchanger 41. For the sake of convenience, a connection pipe that connects the relay unit E to the refrigerant-refrigerant heat exchanger 41 will be referred to as a connection pipe 135, and a connection pipe that connects the relay unit E to the hot-water heat-source expansion means 119 will be referred to as a connection pipe 136.

Similar to the air-conditioning expansion means 117, the hot-water heat-source expansion means 119 functions as a pressure reducing valve or an expansion valve and decompresses and expands the air-conditioning refrigerant. The hot-water heat-source expansion means 119 may be of a type whose opening degree is variably controllable, such as minute flow control means using an electronic expansion valve or inexpensive refrigerant flow control means such as a capillary tube. The refrigerant-refrigerant heat exchanger 41 functions as a radiator (condenser) or an evaporator and exchanges heat between a hot-water-supply refrigerant circulating through the hot-water-supply refrigeration cycle 2 and the air-conditioning refrigerant circulating through the air-conditioning refrigeration cycle 1.

### [Relay Unit E]

The relay unit E connects use-side units (the indoor unit B, the indoor unit C, and a hot-water unit (the hot-water heat-source circuit D)) to the heat source unit A and has a function of setting the indoor heat exchangers 118 as radiators or evaporators and the refrigerant-refrigerant heat exchanger 41 as a water cooler or a water heater by selectively opening or closing valve means 109a or valve means 109b of a first distribution unit 109. The relay unit E at least includes a gas-liquid separator 108, the first distribution unit 109, a second distribution unit 110, a first internal heat exchanger 111, first relay-unit expansion means 112, a second internal heat exchanger 113, and second relay-unit expansion means 114.

In the first distribution unit 109, each of the connection pipes 133 and the connection pipe 135 branches off into two branch pipes, such that first branch pipes (connection pipes 133b and a connection pipe 135b) are connected to the low-pressure-side connection pipe 107, whereas second branch pipes (connection pipes 133a and a connection pipe 135a) are connected to a connection pipe (referred to as a connection pipe 132) that is connected to the gas-liquid separator 108. The connection pipes 133a and the connection pipe 135a are each provided with the valve means 109a that undergoes opening and closing control so as to allow or not to allow the refrigerant to flow therethrough. The connection pipes 133b and the connection pipe 135b are each provided with the valve means 109b that undergoes opening and closing control so as to allow or not to allow the refrigerant to flow therethrough.

In the second distribution unit 110, each of the connection pipes 134 and the connection pipe 136 branches off into two branch pipes, such that first branch pipes (connection pipes 134a and a connection pipe 136a) are connected to a first junction section 115, whereas second branch pipes (connection pipes 134b and a connection pipe 136b) are connected to a second junction section 116. Furthermore, in the second distribution unit 110, the connection pipes 134a and the connection pipe 136a are each provided with a check valve 110a that allows the refrigerant to flow only in one direction, and the connection pipes 134b and the connection pipe 136b are each provided with a check valve 110b that allows the refrigerant to flow only in one direction. Alternatively, valve means, such as solenoid valves, may be used in place of the check valve 110a and the check valve 110b. Consequently, flow switching operation can be reliably performed in the second distribution unit 110.

The first junction section 115 connects the second distribution unit 110 to the gas-liquid separator 108 via the first relay-unit expansion means 112 and the first internal heat exchanger 111. The second junction section 116 branches off into two branch sections from between the second distribution unit 110 and the second internal heat exchanger 113. One of the branch sections is connected to the first junction section 115 between the second distribution unit 110 and the first relay-unit expansion means 112 via the second internal heat exchanger 113, whereas the other branch section (second junction section 116a) is connected to the low-pressure-side connection pipe 107 via the second relay-unit expansion means 114, the second internal heat exchanger 113, and the first internal heat exchanger 111.

The gas-liquid separator 108 separates the air-conditioning refrigerant into a gas refrigerant and a liquid refrigerant and is provided in the high-pressure-side connection pipe 106 such that one end thereof is connected to the valve means 109a of the first distribution unit 109 and another end thereof is connected to the second distribution unit 110 via the first junction section 115. The first distribution unit 109 has a function of allowing the air-conditioning refrigerant to flow into or out from the indoor heat exchangers 118 and the refrigerant-refrigerant heat exchanger 41 by selectively opening or closing the valve means 109a and the valve means 109b. The second distribution unit 110 has a function of allowing the air-conditioning refrigerant to flow in either one of the directions by using the check valves 110a or the check valves 110b.

The first internal heat exchanger 111 is provided in the first junction section 115 between the gas-liquid separator 108 and the first relay-unit expansion means 112 and exchanges heat between the air-conditioning refrigerant flowing through the first junction section 115 and the air-conditioning refrigerant flowing through the second junction section 116a branching from the second junction section 116. The first relay-unit expansion means 112 is provided in the first junction section 115 between the first internal heat exchanger 111 and the second distribution unit 110 and decompresses and expands the air-conditioning refrigerant, The first relay-unit expansion means 112 may be of a type whose opening degree is variably controllable, such as minute flow control means using an electronic expansion valve or inexpensive refrigerant flow control means such as a capillary tube.

The second internal heat exchanger 113 is provided in the second junction section 116 and exchanges heat between the air-conditioning refrigerant flowing through the second junction section 116 and the air-conditioning refrigerant flowing through the second junction section 116a branching from the second junction section 116. The second relay-unit expansion means 114 is provided in the second junction section 116 between the second internal heat exchanger 113 and the second distribution unit 110. The second relay-unit expansion means 114 functions as a pressure reducing valve or an expansion valve and decompresses and expands the air-conditioning refrigerant. Similar to the first relay-unit expansion means 112, the second relay-unit expansion means 114 may be of a type whose opening degree is variably controllable, such as minute flow control means using an electronic expansion valve or inexpensive refrigerant flow control means such as a capillary tube.

Accordingly, in the air-conditioning refrigeration cycle 1, the air-conditioning compressor 101, the four-way valve 102, the indoor heat exchangers 118, the air-conditioning expansion means 117, and the outdoor heat exchanger 103 are connected in series, the air-conditioning compressor 101, the four-way valve 102, the refrigerant-refrigerant heat exchanger 41, the hot-water heat-source expansion means 119, and the outdoor heat exchanger 103 are connected in series, and the indoor heat exchangers 118 and the refrigerant-refrigerant heat exchanger 41 are connected in parallel via the relay unit E, so that a first refrigerant circuit is formed. The air-conditioning refrigeration cycle 1 is established by circulating the air-conditioning refrigerant through this first refrigerant circuit.

The type of air-conditioning compressor 101 used is not particularly limited so long as it can compress the suction refrigerant to a high-pressure state. For example, the air-conditioning compressor 101 may alternatively be of various types, such as a reciprocating type, a rotary type, a scroll type, or a screw type. Further, the air-conditioning compressor 101 may be of a type whose rotation speed is variably controllable by an inverter, or may be of a type whose rotation speed is fixed.

Furthermore, the kind of refrigerant circulating through the air-conditioning refrigeration cycle 1 is not particularly limited, and may be, for example, a natural refrigerant, such as carbon dioxide (CO₂), hydrocarbon, or helium, an alternative refrigerant not containing chlorine, such as HFC410A, HFC407C, or HFC404A, or a fluorocarbon refrigerant used in existing products, such as R22 or R134a.

The operation of the air-conditioning refrigeration cycle 1 will now be described.

The following description of the operation relates to a case where the indoor unit B serves as the cooling load, the indoor unit C serves as the heating load, and the hot-water heat-source circuit D serves as the hot water load. The flow of the air-conditioning refrigerant is expressed by the open/closed states (hollow state (open) and solid state (closed)) of the check valves and the valve means.

First, the air-conditioning refrigerant turned into a high-temperature, high-pressure state by the air-conditioning compressor 101 is discharged from the air-conditioning compressor 101 and flows through the check valve 105c via the four-way valve 102 so as to be guided to the high-pressure-side connection pipe 106. The air-conditioning refrigerant in a superheated gas state then flows into the gas-liquid separator 108 in the relay unit E. The air-conditioning refrigerant in the superheated gas state flowing into the gas-liquid separator 108 flows through the connection pipe 132 and is distributed to a circuit or circuits with the valve means 109a of the first distribution unit 109 in an open state. In this case, the air-conditioning refrigerant in the superheated gas state is made to flow into the indoor unit C and the hot-water heat-source circuit D.

The air-conditioning refrigerant flowing into the indoor unit C rejects heat (that is, heats the indoor air) in the indoor heat exchangers 118 and is decompressed by the air-conditioning expansion means 117 before merging in the first junction section 115. The air-conditioning refrigerant flowing into the hot-water heat-source circuit D rejects heat (that is, transfers heat to the hot-water-supply refrigeration cycle 2) in the refrigerant-refrigerant heat exchanger 41 and is decompressed by the hot-water heat-source expansion means 119 before merging with the air-conditioning refrigerant flowing out from the indoor unit C in the first junction section 115.

On the other hand, a portion of the air-conditioning refrigerant in the superheated gas state flowing into the gas-liquid separator 108 exchanges heat, in the first internal heat exchanger 111, with an air-conditioning refrigerant expanded to a low-temperature, low-pressure state by the second relay-unit expansion means 114, thereby obtaining a degree of supercooling. Then, the air-conditioning refrigerant travels through the first relay-unit expansion means 112 so as to merge with the air-conditioning refrigerant used for air-conditioning (the air-conditioning refrigerant flowing into the indoor unit C and the hot-water heat-source circuit D and rejecting heat in the indoor heat exchangers 118 and the refrigerant-refrigerant heat exchanger 41, respectively) in the first junction section 115. A portion of the air-conditioning refrigerant in the superheated state traveling through the first relay-unit expansion means 112 may be made absent by fully closing the first relay-unit expansion means 112.

Subsequently, the merged air-conditioning refrigerant exchanges heat, in the second internal heat exchanger 113, with the air-conditioning refrigerant expanded to the low-temperature, low-pressure state by the second relay-unit expansion means 114, thereby obtaining a degree of supercooling. Then, the air-conditioning refrigerant is distributed to the second junction section 116 side and the second relay-unit expansion means 114 side.

The air-conditioning refrigerant flowing through the second junction section 116 is distributed to a circuit or circuits with the valve means 109b in an open state. In this case, the air-conditioning refrigerant flowing through the second junction section 116 flows into the indoor unit B, is expanded to a low-temperature, low-pressure state by the air-conditioning expansion means 117, is evaporated in the indoor heat exchangers 118, and then merges in the low-pressure-side connection pipe 107 via the valve means 109b. The air-conditioning refrigerant flowing through the second relay-unit expansion means 114 evaporates by undergoing heat exchange in the second internal heat exchanger 113 and the first internal heat exchanger 111, and then merges, in the low-pressure-side connection pipe 107, with the air-conditioning refrigerant flowing out from the indoor unit B. Then, the merged air-conditioning refrigerant in the low-pressure-side connection pipe 107 travels through the check valve 105d and is guided to the outdoor heat exchanger 103 where a residual liquid refrigerant is evaporated depending on the operating condition, and subsequently returns to the air-conditioning compressor 101 via the four-way valve 102 and the accumulator 104.

### [Hot-Water Refrigeration Cycle 2]

The hot-water-supply refrigeration cycle 2 is constituted of a hot-water-supply compressor 21, the heat medium-refrigerant heat exchanger 51, hot-water-supply expansion means 22, and the refrigerant-refrigerant heat exchanger 41. Specifically, in the hot-water-supply refrigeration cycle 2, the hot-water-supply compressor 21, the heat medium-refrigerant heat exchanger 51, the hot-water-supply expansion means 22, and the refrigerant-refrigerant heat exchanger 41 are connected in series by refrigerant pipes 45 so that a second refrigerant circuit is formed. The hot-water-supply refrigeration cycle 2 is established by circulating the hot-water-supply refrigerant through this second refrigerant circuit.

The hot-water-supply compressor 21 takes in the hot-water-supply refrigerant and compresses the hot-water-supply refrigerant to a high-temperature, high-pressure state. The hot-water-supply compressor 21 may be of a type whose rotation speed is variably controllable by an inverter, or may be of a type whose rotation speed is fixed. Furthermore, the type of hot-water-supply compressor 21 used is not particularly limited so long as it can compress the intake hot-water-supply refrigerant to a high-pressure state. For example, the hot-water-supply compressor 21 may be of various types, such as a reciprocating type, a rotary type, a scroll type, or a screw type.

The heat medium-refrigerant heat exchanger 51 exchanges heat between a heat medium (a fluid such as water or antifreeze) circulating through the hot water load 3 and the hot-water-supply refrigerant circulating through the hot-water-supply refrigeration cycle 2. Specifically, the hot-water-supply refrigeration cycle 2 and the hot water load 3 are cascade-connected to each other via the heat medium-refrigerant heat exchanger 51. The hot-water-supply expansion means 22 functions as a pressure reducing valve or an expansion valve and decompresses and expands the hot-water-supply refrigerant. The hot-water-supply expansion means 22 may be of a type whose opening degree is variably controllable, such as minute flow control means using an electronic expansion valve or inexpensive refrigerant flow control means such as a capillary tube. The refrigerant-refrigerant heat exchanger 41 exchanges heat between the hot-water-supply refrigerant circulating through the hot-water-supply refrigeration cycle 2 and the air-conditioning refrigerant circulating through the air-conditioning refrigeration cycle 1.

The kind of hot-water-supply refrigerant circulating through the hot-water-supply refrigeration cycle 2 is not particularly limited, and may be, for example, a natural refrigerant, such as carbon dioxide, hydrocarbon, or helium, an alternative refrigerant not containing chlorine, such as HFC410A, HFC407C, or HFC404A, or a fluorocarbon refrigerant used in existing products, such as R22 or R134a.

The operation of the hot-water-supply refrigeration cycle 2 will now be described.

First, the hot-water-supply refrigerant turned into a high-temperature, high-pressure state by the hot-water-supply compressor 21 is discharged from the hot-water-supply compressor 21 and flows into the heat medium-refrigerant heat exchanger 51. In the heat medium-refrigerant heat exchanger 51, the intake hot-water-supply refrigerant rejects heat so as to heat water circulating through the hot water load 3. The hot-water-supply refrigerant is expanded by the hot-water-supply expansion means 22 until reaching an outlet temperature or lower of the refrigerant-refrigerant heat exchanger 41 in the hot-water heat-source circuit D of the air-conditioning refrigeration cycle 1. In the refrigerant-refrigerant heat exchanger 41, the expanded hot-water-supply refrigerant evaporates by receiving heat from the air-conditioning refrigerant flowing through the hot-water heat-source circuit D constituting the air-conditioning refrigeration cycle 1, and then returns to the hot-water-supply compressor 21.

### [Hot-Water Load 3]

The hot water load 3 is constituted of a water circulation pump 31, the heat medium-refrigerant heat exchanger 51, and a hot-water storage tank 32. Specifically, in the hot water load 3, the water circulation pump 31, the heat medium-refrigerant heat exchanger 51, and the hot-water storage tank 32 are connected in series by a stored-hot-water circulation pipe 203 so that a water circuit (heat medium circuit) is formed. The hot water load 3 is established by circulating water for hot water supply through this water circuit. The stored-hot-water circulation pipe 203 constituting this water circuit is formed of a copper pipe, a stainless pipe, a steel pipe, or a vinyl-chloride-based pipe.

The water circulation pump 31 takes in the water stored in the hot-water storage tank 32 and applies pressure to the water so as to circulate the water through the hot water load 3, and may be, for example, of a type whose rotation speed can be controlled by an inverter. As described above, the heat medium-refrigerant heat exchanger 51 exchanges heat between the heat medium (a fluid such as water or antifreeze) circulating through the hot water load 3 and the hot-water-supply refrigerant circulating through the hot-water-supply refrigeration cycle 2. The hot-water storage tank 32 stores the water heated in the heat medium-refrigerant heat exchanger 51.

The operation of the hot water load 3 will now be described.

First, relatively low temperature water stored in the hot-water storage tank 32 is drawn out from the bottom of the hot-water storage tank 32 and pressurized by the water circulation pump 31. The water pressurized by the water circulation pump 31 flows into the heat medium-refrigerant heat exchanger 51. In the heat medium-refrigerant heat exchanger 51, the water receives heat from the hot-water-supply refrigerant circulating through the hot-water-supply refrigeration cycle 2. Specifically, the water flowing into the heat medium-refrigerant heat exchanger 51 is boiled and increased in temperature by the hot-water-supply refrigerant circulating through the hot-water-supply refrigeration cycle 2. The boiling water returns to an upper portion of the hot-water storage tank 32 where the temperature is relatively high, so as to be stored in the hot-water storage tank 32.

For the sake of convenience, the refrigerant-refrigerant heat exchanger 41, the hot-water heat-source expansion means 119, the heat medium-refrigerant heat exchanger 51, the hot-water-supply compressor 21, and the hot-water-supply expansion means 22 will collectively be referred to as "hot-water unit". Furthermore, although not shown in the drawings, the integrated air-conditioning and hot-water system 100 may be provided with a sensor for detecting the pressure of discharged air-conditioning refrigerant, a sensor for detecting the pressure of suction air-conditioning refrigerant, a sensor for detecting the temperature of discharged air-conditioning refrigerant, a sensor for detecting the temperature of suction air-conditioning refrigerant, a sensor for detecting the temperature of the air-conditioning refrigerant flowing into and out from the outdoor heat exchanger 103, a sensor for detecting the temperature of outside air taken into the heat source unit A, a sensor for detecting the temperature of air-conditioning refrigerant flowing into and out from the indoor heat exchangers 118, and a sensor for detecting the temperature of water stored in the hot-water storage tank 32.

Information (such as temperature information and pressure information) detected by these various sensors is transmitted to control means (not shown) that controls the operation of the integrated air-conditioning and hot-water system 100, and is used for controlling the driving frequency of the air-conditioning compressor 101, the switching of the four-way valve 102, the opening and closing of the valve means 109a and the valve means 109b, the driving frequency of the hot-water-supply compressor 21, the driving of the water circulation pump 31, and the opening degree of each throttle device.

Since the air-conditioning refrigeration cycle 1 and the hot-water-supply refrigeration cycle 2 have refrigerant circuit configurations (the first refrigerant circuit constituting the air-conditioning refrigeration cycle 1 and the second refrigerant circuit constituting the hot-water-supply refrigeration cycle 2) that are independent of each other, as described above, the refrigerants circulating through the refrigerant circuits may be of the same kind or of different kinds. In other words, the refrigerants in the respective refrigerant circuits flow so as to exchange heat in the refrigerant-refrigerant heat exchanger 41 and the heat medium-refrigerant heat exchanger 51 without mixing with each other.

If a refrigerant with a low critical temperature is used as the hot-water-supply refrigerant, when high temperature water is to be supplied, it is assumed that the hot-water-supply refrigerant would turn into a supercritical state during the heat rejecting process in the heat medium-refrigerant heat exchanger 51. However, when a refrigerant is generally in a supercritical state in the heat rejecting process, changes in COP caused by a change in pressure and outlet temperature of the radiator are large. In order to perform operation so as to obtain high COP, a further sophisticated control is required. On the other hand, since a refrigerant with a low critical temperature generally has a high saturation pressure relative to the same temperature, the wall thicknesses of the pipe and the compressor need to be increased accordingly, leading to an increase in cost.

Furthermore, in view of the fact that the recommended temperature for the water stored in the hot-water storage tank 32 for suppressing multiplication of Legionella bacteria is 62°C or higher, it is assumed that a target temperature for hot water to be supplied would often be at least 62°C or higher. In view of this assumption, a refrigerant having a critical temperature of at least 62°C or higher is used as the hot-water-supply refrigerant. This is because high COP can be obtained more stably at a lower cost when such a refrigerant is used as the hot-water-supply refrigerant in the hot-water-supply refrigeration cycle 2.

Although the above description relates to a case where excess refrigerant is retained by a liquid receiver (the accumulator 104) in the air-conditioning refrigeration cycle 1, not limited to this case, the accumulator 104 may alternatively be removed if the excess refrigerant can be retained in heat exchangers serving as radiators in the refrigeration cycle. Furthermore, although Fig. 1 shows an example in which two or more indoor units, that is, the indoor unit B and the indoor unit C, are connected, the connected number of indoor units is not particularly limited. For example, one or more indoor units B may be connected, and no indoor units C or one or more indoor units C may be connected. The indoor units constituting the air-conditioning refrigeration cycle 1 may all have the same capacity or have different capacities ranging from large to small.

Accordingly, since the hot water load system is constituted of a binary cycle in the integrated air-conditioning and hot-water system 100 according to Embodiment, when there is a demand for water at a high temperature (for example, 80°C), the temperature of the radiator in the hot-water-supply refrigeration cycle 2 may simply be increased to a high temperature (for example, a condensing temperature of 85°C) without having to also increase the condensing temperature (for example, 50°C) of the indoor unit C if there are other heating loads, thereby achieving an energy-efficient configuration. Furthermore, for example, if there is a demand for high-temperature water during an air-conditioning cooling mode in the summertime, although the hot water needs to be provided by a boiler or the like in the related art, the hot water can be supplied by recovering and reusing the heating energy, which is discharged to the atmosphere in the related art, so that the system COP is significantly improved, thereby achieving an energy-efficient configuration.

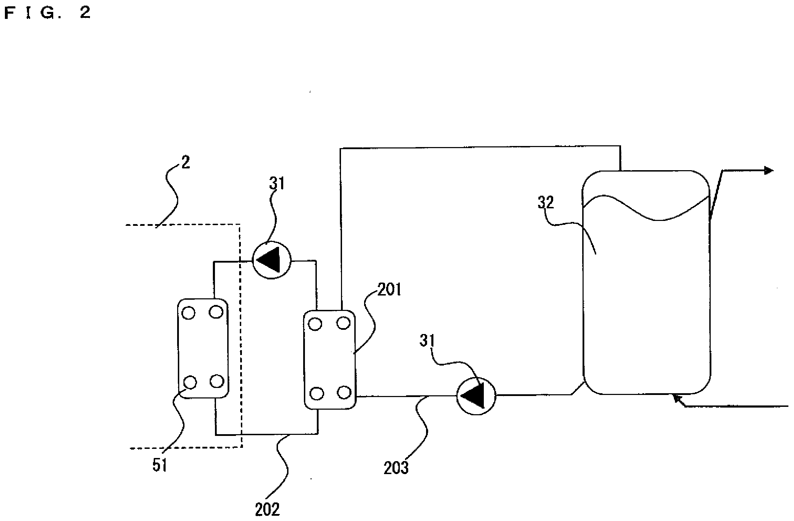

Fig. 2 schematically illustrates a circuit configuration for describing another explanatory embodiment of a hot water load (referred to as "hot water load 3a" hereinafter). An example of how water circulating through the hot water load 3a is heated will be described below with reference to Fig. 2.

As shown in Fig. 2, a hot-water-supply water circulation cycle (hot-water heat-medium circulation cycle) 4 is cascade-connected between the hot-water-supply refrigeration cycle 2 and the hot water load 3a via the heat medium-refrigerant heat exchanger 51 and a water-water heat exchanger (heat medium-heat medium heat exchanger) 201. Although water is heated (increased in temperature) directly in the heat medium-refrigerant heat exchanger 51 in the open-circuit hot water load 3 in the circuit configuration example in Fig. 1, the circuit configuration example in Fig. 2 is provided with the hot-water-supply water circulation cycle 4 so that the water is indirectly heated in the water-water heat exchanger 201 in the open-circuit hot water load 3a.

### [Hot-Water-Supply Water Circulation Cycle 4]

The hot-water-supply water circulation cycle 4 is constituted of a heat-medium circulation pump 31a, the heat medium-refrigerant heat exchanger 51, and the water-water heat exchanger 201. Specifically, in the hot-water-supply water circulation cycle 4, the heat-medium circulation pump 31a, the heat medium-refrigerant heat exchanger 51, and the water-water heat exchanger 201 are connected in series by water circulation pipes 202 so that a water circuit (heat medium circuit) is formed. The hot-water-supply water circulation cycle 4 is established by circulating a heat medium for heating (water for heating) through this heat-medium circuit (water circuit). The water circulation pipe 202 constituting the water circuit is formed of a copper pipe, a stainless pipe, a steel pipe, or a vinyl-chloride-based pipe.

The heat-medium circulation pump 31a takes in the water (heat medium) flowing through the water circulation pipe 202 and applies pressure to the water so as to circulate the water through the hot-water-supply water circulation cycle 4, and may be, for example, of a type whose rotation speed can be controlled by an inverter. The heat medium-refrigerant heat exchanger 51 exchanges heat between the water circulating through the hot-water-supply water circulation cycle 4 and the hot-water-supply refrigerant circulating through the hot-water-supply refrigeration cycle 2. The water-water heat exchanger 201 exchanges heat between the water circulating through the hot-water-supply water circulation cycle 4 and the water circulating through the hot water load 3a. Although this description relates to an example in which water is circulated through the hot-water-supply water circulation cycle 4, other fluids, such as brine (antifreeze), may be circulated as the heat medium.

First, relatively low temperature water stored in the hot-water storage tank 32 is drawn out from the bottom of the hot-water storage tank 32 and pressurized by the water circulation pump 31. The water pressurized by the water circulation pump 31 flows into the water-water heat exchanger 201. In the water-water heat exchanger 201, the water receives heat from the water circulating through the hot-water-supply water circulation cycle 4. Specifically, the water flowing into the water-water heat exchanger 201 is boiled and increased in temperature by the water circulating through the hot-water-supply water circulation cycle 4. The boiling water returns to the upper portion of the hot-water storage tank 32 where the temperature is relatively high, so as to be stored in the hot-water storage tank 32. Specifically, the heat from the hot-water-supply refrigeration cycle 2 is transferred to the hot-water-supply water circulation cycle 4 in the heat medium-refrigerant heat exchanger 51 and to the hot water load 3a in the water-water heat exchanger 201.

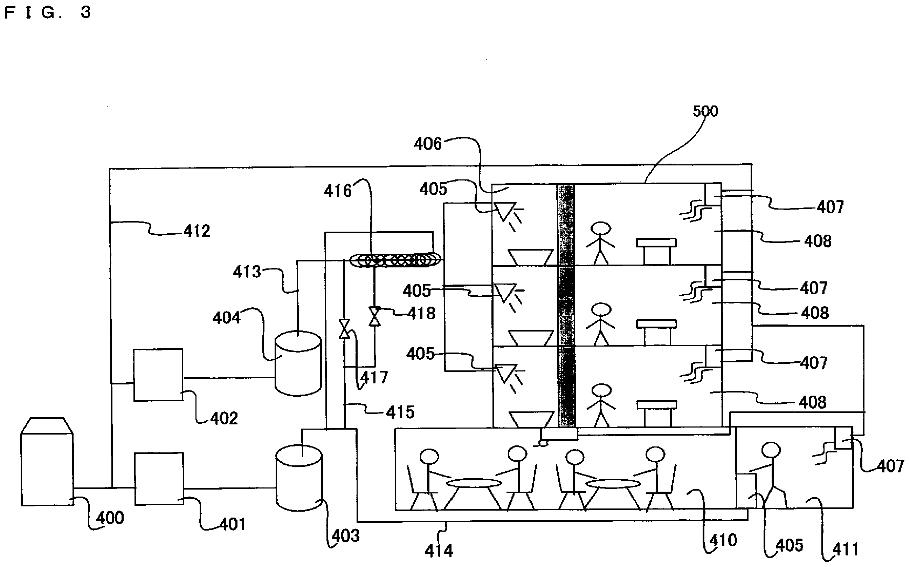

Fig. 3 schematically illustrates an installation example of the integrated air-conditioning and hot-water system 100. An operation method based on the installation of the integrated air-conditioning and hot-water system 100 will be described in detail with reference to Fig. 3. Fig. 3 is illustrated while conceiving a state in which the integrated air-conditioning and hot-water system 100 is installed in an architectural structure 500, such as a building, an apartment, or a hotel. The architectural structure 500 has residential spaces 408 equipped with hot-water utility rooms 406, and a commercial facility 410 equipped with a kitchen 411.

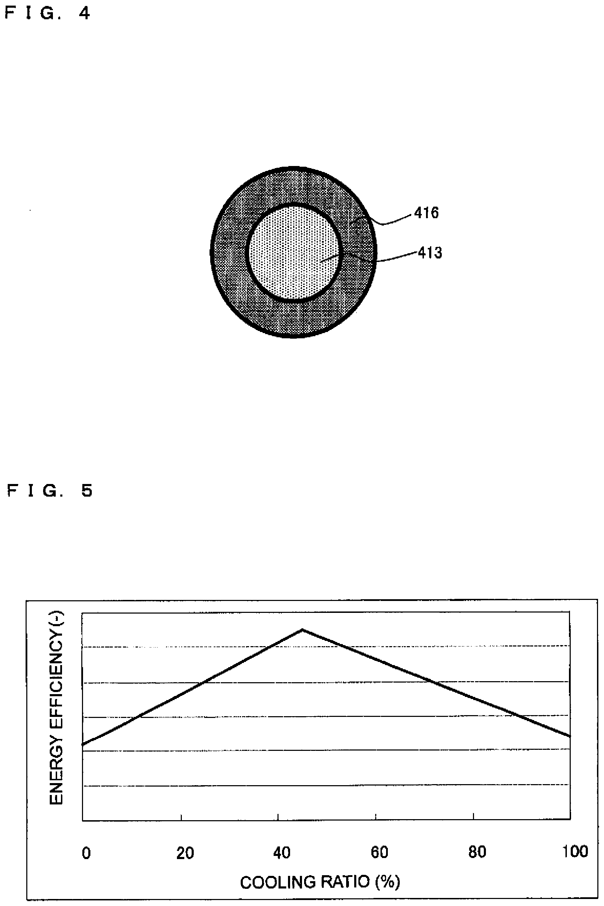

In the integrated air-conditioning and hot-water system 100, an outdoor air-conditioning apparatus 400, an intermediate-temperature-range hot-water device 401, a high-temperature-range hot-water device 402, and five indoor air-conditioning apparatuses 407 are connected via refrigerant pipes 412 (corresponding to the high-pressure-side connection pipe 106 and the low-pressure-side connection pipe 107). The outdoor air-conditioning apparatus 400 corresponds to the heat source unit A shown in Fig. 1. The intermediate-temperature-range hot-water device 401 and the high-temperature-range hot-water device 402 each correspond to the hot-water unit. The indoor air-conditioning apparatuses 407 each correspond to the indoor unit B or the indoor unit C. In other words, two hot-water units are installed in Fig. 4.

The intermediate-temperature-range hot-water device 401 is connected to an intermediate-temperature water storage tank 403, which corresponds to the hot-water storage tank 32, via the stored-hot-water circulation pipe 203. The intermediate-temperature water storage tank 403 is connected to hot-water tapping devices 405 in the hot-water utility rooms 406 via an intermediate-temperature main supply pipe 415 and also to a hot-water tapping device 405 in the kitchen 411 via an intermediate-temperature supply pipe 414. The high-temperature-range hot-water device 402 is connected to a high-temperature water storage tank 404, which corresponds to the hot-water storage tank 32, via the stored-hot-water circulation pipe 203. The high-temperature water storage tank 404 is connected to the hot-water tapping devices 405 in the hot-water utility rooms 406 via a high-temperature supply pipe 413, and also to the hot-water tapping device 405 in the kitchen 411 via the high-temperature supply pipe 413, the intermediate-temperature main supply pipe 415, and the intermediate-temperature supply pipe 414.

The intermediate-temperature main supply pipe 415 connects the intermediate-temperature supply pipe 414 and the high-temperature supply pipe 413 via an intermediate-temperature supply switch valve 417. Moreover, a branch pipe branching off from the intermediate-temperature main supply pipe 415 is used as a freeze protection water pipe 416. This freeze protection water pipe 416 is wound several times around the high-temperature supply pipe 413 via a freeze-protection-pipe supply valve 418 and is connected to the intermediate-temperature supply pipe 414 (at the upstream side of a part thereof connected to the intermediate-temperature main supply pipe 415).

An operation method of the integrated air-conditioning and hot-water system 100 throughout the year will now be described.

### [Operation Method of Integrated Air-Conditioning and Hot-Water System 100 in Summer]

In this case, the outdoor air-conditioning apparatus 400 is often performing heating operation while the indoor air-conditioning apparatuses 407 are often performing cooling operation. In the hot-water utility rooms 406 disposed in the residential spaces 408, hot water is frequently used regardless of time. In other words, in the hot-water utility rooms 406, hot water is frequently used by the residents for the purpose of taking a shower or a bath. Furthermore, in the kitchen 411, hot water supply and cooling are frequently necessary throughout the year.

However, the outside temperature is normally high in the summertime. Therefore, in the integrated air-conditioning and hot-water system 100, the temperature setting is set to a low value, the amount of hot water stored in the high-temperature water storage tank 404 is reduced, and the amount of water stored in the intermediate-temperature water storage tank 403 is increased. Furthermore, the integrated air-conditioning and hot-water system 100 uses the heat, which is discharged from the outdoor air-conditioning apparatus 400 as exhaust heat in the related art, for boiling water in the intermediate-temperature-range hot-water device 401 and the high-temperature-range hot-water device 402, thereby allowing energy-efficient operation.

Furthermore, in the summertime, the temperature range for hot water supply can be in a low temperature range and so the set temperature can be reduced. Thus, the operating time of the system can be reduced since the time required for operating the intermediate-temperature-range hot-water device 401 and the high-temperature-range hot-water device 402 can be shortened, thereby allowing energy-efficient operation. Moreover, in the summertime, the cooling operation may be performed in the intermediate-temperature-range hot-water device 401, and cold water may be stored in the intermediate-temperature water storage tank 403, so that the cold water may be used for cooling by using a fan coil unit or the like.

Furthermore, if an air-conditioning load is not used in each residential space 408 in the summertime, heating operation may be performed in the intermediate-temperature-range hot-water device 401, and the heat may be exhausted into the residential space 408, thereby allowing energy-efficient operation of the system. Although the above description relates to air-conditioning operation performed by using a refrigerant, the cold water produced in the intermediate-temperature-range hot-water device 401 may be used for cooling by using a fan coil unit or the like. If the set temperature is low, the water heated in the intermediate-temperature-range hot-water device 401 may be heated again before being heated in the high-temperature-range hot-water device 402 so as to reduce the operating time of the high-temperature-range hot-water device 402, thereby saving energy.

### [Usage of Integrated Air-Conditioning and Hot-Water-Supply System 100 in Winter]

In this case, the outdoor air-conditioning apparatus 400 is often performing cooling operation while the indoor air-conditioning apparatuses 407 are often performing heating operation. In the hot-water utility rooms 406 set in the residential spaces 408, hot water is frequently used regardless of time. Moreover, due to decreasing outside temperature during the nighttime and early morning hours, the high-temperature supply pipe 413, the intermediate-temperature supply pipe 414, and the intermediate-temperature main supply pipe 415 require pipe-freeze protection operation. Furthermore, in the kitchen 411, hot water supply and cooling are often necessary throughout the year.

In the wintertime, there is a possibility of a water pipe for guiding water to freeze. In the related art, freeze protection operation is performed by wrapping an electric heater or the like around a water pipe. In contrast, in the integrated air-conditioning and hot-water system 100, the pipes are protected from freezing by using the freeze protection water pipe 416 for freeze prevention. Specifically, during the nighttime or when the outside temperature decreases, the intermediate-temperature water stored in the intermediate-temperature water storage tank 403 is supplied to the freeze protection water pipe 416 so that the pipes are prevented from freezing. The pipes may be prevented from freezing by opening and closing the freeze-protection-pipe supply valve 418 at predetermined intervals based on the outside temperature or a timer.

A prevention method of preventing a water pipe (the high-temperature supply pipe 413) from freezing by using the freeze protection water pipe 416 will be further described.

Fig. 4 is a schematic cross-sectional view illustrating an example of a cross-sectional configuration of the freeze protection water pipe 416. A method of how the freeze protection water pipe 416 is utilized will be described with reference to Figs. 3 and 4. Fig. 4 illustrates an example in which the freeze protection water pipe 416 and the high-temperature supply pipe 413 located therein form a double-layer pipe structure.

Generally, a water pipe is protected from freezing by wrapping an electric heater or the like around the pipe surface. Normally, in order to protect the water pipe from freezing, the pipe surface needs to be heated to a high temperature by the electric heater or the like. However, when the water pipe is to be prevented from freezing by using the electric heater or the like, there is a drawback in that the water needs to be heated excessively to a non-freezing temperature or higher (generally, the freezing temperature is 0°C or lower). It is certain that the pipe would not freeze and can thus be protected by setting the water to a non-freezing temperature (generally, 0°C or higher).

Normally, the pipe will not freeze when hot-water operation is being performed. However, when hot-water operation is not being performed and cold water is being generated due to cooling operation performed by the intermediate-temperature-range hot-water device 401, there is a possibility that the pipe may freeze. In the integrated air-conditioning and hot-water system 100, the freeze protection water pipe 416 is used to prevent the pipe from freezing. Although Fig. 4 illustrates an example of a double-layer pipe structure (the high-temperature supply pipe 413 and the freeze protection water pipe 416), the freeze protection water pipe 416 may be wound around the outer peripheral surface of the high-temperature supply pipe 413 in the form of a spiral, as shown in Fig. 3.

Fig. 5 is a graph illustrating energy efficiency when the cooling operation and the heating operation are simultaneously performed. The following description based on Fig. 5 relates to how operation that allows optimal energy efficiency throughout the year, which is a characteristic feature of the integrated air-conditioning and hot-water system 100, is achieved. In Fig. 5, the vertical axis denotes the energy efficiency, and the horizontal axis denotes a cooling ratio (%). When the cooling ratio is 0%, all of the indoor air-conditioning apparatuses 407 are performing heating operation. Thus, when the cooling ratio is 100%, all of the indoor air-conditioning apparatuses 407 are performing cooling operation.

Normally, a state where all of the indoor air-conditioning apparatuses 407 are performing cooling operation usually occurs in the summertime, and the number of indoor air-conditioning apparatuses 407 used for heating is small. When only the cooling operation is performed, the outdoor air-conditioning apparatus 400 performs heating operation. In that case, heat is exhausted by an air-sending device (not shown) installed in the outdoor air-conditioning apparatus 400. As a result, the heat is discharged into the atmosphere, resulting in poor efficiency. Energy-efficient operation can be achieved by performing the heating operation using this exhaust heat; however, it goes without saying, there is little heating purpose operation in the summertime.

In the integrated air-conditioning and hot-water system 100, when only the cooling operation is performed in the indoor air-conditioning apparatuses 407 in the summertime, heating operation is performed in the intermediate-temperature-range hot-water device 401 and the high-temperature-range hot-water device 402 so that the cooling ratio becomes the point shown in Fig. 5 where energy efficiency becomes the largest.

However, if the cooling load is large, it is sometimes not possible to perform the heating operation in the intermediate-temperature-range hot-water device 401 and the high-temperature-range hot-water device 402 to achieve the cooling ratio in which the energy efficiency becomes the largest. According to the invention, in that case, the set temperature of the intermediate-temperature-range hot-water device 401 is forcibly increased in view of the outside temperature and the cooling load. Consequently, the heating load is increased, whereby the cooling ratio corresponding to the maximum energy efficiency can be achieved.

In the indoor air-conditioning apparatuses 407, an upper limit of a settable temperature range is generally between 28°C and 29°C. However, the intermediate-temperature-range hot-water device 401 and the high-temperature-range hot-water device 402 are hot-water units, and by using a refrigerant having a critical temperature of 70°C or higher, the set temperature can be set to a value higher than the normal set temperature of the indoor air-conditioning apparatuses 407. Consequently, although it is normally not possible to set the heating load enough to raise the cooling ratio to an optimal point in the indoor air-conditioning apparatuses 407, the heating load is forcibly increased in the intermediate-temperature-range hot-water device 401 and the high-temperature-range hot-water device 402 in the integrated air-conditioning and hot-water system 100, thereby raising the cooling ratio to the optimal point. Therefore, according to the integrated air-conditioning and hot-water system 100, the load can be controlled to where the optimal energy efficiency is reached, thereby allowing optimal operation.

In Fig. 5, when only the cooling operation is performed, the heating operation is performed in a mixed fashion so that energy-efficient operation can be achieved. On the other hand, in the wintertime, the cooling operation is forcibly performed so that the heating operation and the cooling operation are performed in a mixed fashion, thereby achieving operation with optimal energy efficiency.

In a normal integrated air-conditioning and hot-water system, independent sensors are installed in the individual circuits so as to be used for controlling the circuits. Based on information from these sensors, control means controls respective actuators. Alternatively, common sensors shared by multiple independent systems may be installed, as shown in Fig. 1. In this case, the control means may control the actuators on the basis of information from the sensors.

For example, with regard to operation control of the air-conditioning refrigeration cycle 1 and the hot-water-supply refrigeration cycle 2, a sensor may be installed on the air-conditioning refrigeration cycle 1 side of the refrigerant-refrigerant heat exchanger 41. Thus, the air-conditioning compressor 101 installed in the air-conditioning refrigeration cycle 1 and the hot-water compressor 21 installed in the hot-water-supply refrigeration cycle 2 can be controlled on the basis of information from the sensor installed on the air-conditioning refrigeration cycle 1 side of the refrigerant-refrigerant heat exchanger 41, thereby achieving stable operation.

Furthermore, the opening degrees of the hot-water heat-source expansion means 119 and the hot-water-supply expansion means 22 can be controlled on the basis of information from the sensor installed on the air-conditioning refrigeration cycle 1 side of the refrigerant-refrigerant heat exchanger 41; hence, operation controlling the degree of superheat on the air-conditioning refrigeration cycle 1 side and the degree of supercooling on the hot-water-supply refrigeration cycle 2 side can be performed.

Moreover, temperature sensors may be installed in the heat source side inlet and outlet of the heat medium-refrigerant heat exchanger 51. In this case, if there is no temperature difference, it is determined that a heat source is not connected, so that the valve means 109 are closed, and the hot-water-supply compressor 21 is stopped from operating, thereby extending the lifespan of the device while also saving energy since unnecessary inputs are not applied. The aforementioned sensors may be of any type, such as pressure sensors, differential pressure sensors, or flow rate sensors, as an alternative to temperature sensors.

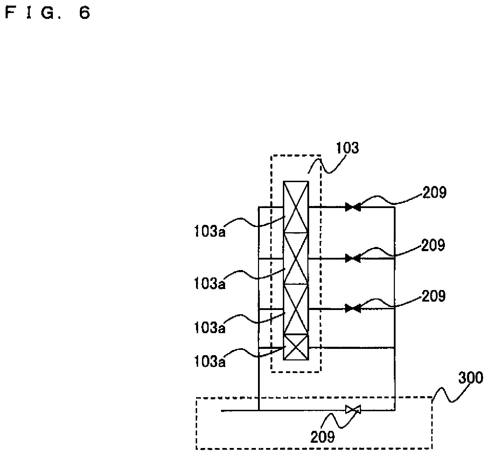

Fig. 6 illustrates an example of the structure of the outdoor heat exchanger 103. The following description based on Fig. 6 relates to the outdoor heat exchanger 103 that is capable of performing heating operation throughout the year. In a case where the integrated air-conditioning and hot-water system 100 is used only for normal air-conditioning, heating operation is generally performed when the outside wet-bulb temperature is 15°C or lower. However, when performing hot-water operation, heating operation needs to be performed irrespective of the outside temperature. Fig. 6 illustrates an example where the outdoor heat exchanger 103 has a divided structure with multiple heat exchangers (referred to as "divided heat exchangers 103a" hereinafter) therein. The outdoor heat exchanger 103 may have a divided structure obtained by combining four heat exchangers or may have a divided structure obtained by dividing a single heat exchanger into four parts.

As shown in Fig. 6, the high-pressure-side connection pipe 106 is branched into multiple branch pipes that are respectively connected to the divided heat exchangers 103a constituting the outdoor heat exchanger 103. Furthermore, each of the branch pipes of the high-pressure-side connection pipe 106 is provided with a solenoid valve 209 as an on-off valve that undergoes opening and closing control so as to allow or not to allow a refrigerant to flow therethrough. One of the multiple branch pipes of the high-pressure-side connection pipe 106 serves as a bypass circuit 300 that bypasses the divided heat exchangers 103a. The bypass circuit 300 is also provided with a solenoid valve 209 as a bypass on-off valve. Specifically, the outdoor heat exchanger 103 constituting the air-conditioning refrigeration cycle 1 controls the opening and closing of the solenoid valves 209 so as to control the amount of refrigerant flowing therein, whereby the heat exchanger capacity can be divided.

If the outside wet-bulb temperature rises, that is, if the intake temperature in the air-conditioning compressor 101 is about to exceed an operational range (generally, a maximum of 15°C), it is desirable to reduce the heat exchanger capacity of the outdoor heat exchanger 103. In the integrated air-conditioning and hot-water system 100, all of or some of the solenoid valves 209 are closed so as to block the refrigerant flowing into the outdoor heat exchanger 103, thereby preventing deviation from the operational range of the air-conditioning compressor 101. Specifically, the number of divided heat exchangers 103a that are to receive the refrigerant is determined in accordance with the operational range of the air-conditioning compressor 101, and the solenoid valves 209 are closed in accordance with the determined number so as to control the inflow of refrigerant, thereby preventing deviation from the operational range of the air-conditioning compressor 101.

However, even if the heat exchanger capacity of the outdoor heat exchanger 103 is reduced by closing the solenoid valves 209, deviation from the operational range of the air-conditioning compressor 101 may still sometimes occur. In this case, it is desirable to return the refrigerant to the air-conditioning compressor 101 without making the refrigerant flow into the outdoor heat exchanger 103. Thus, by opening the solenoid valve 209 disposed in the bypass circuit 300, the refrigerant is returned toward the suction side of the air-conditioning compressor 101 without being made to flow into the outdoor heat exchanger 103. Accordingly, the evaporating temperature is prevented from increasing, thereby allowing operation without deviation from the operational range of the air-conditioning compressor 101.

Furthermore, the solenoid valve 209 disposed in the bypass circuit 300 is selected such that an expression CVa<CVb is satisfied, where CVa denotes a flow coefficient of the refrigerant when passing through the outdoor heat exchanger 103, and CVb denotes a flow coefficient of the refrigerant when flowing through the bypass circuit 300. Moreover, if the operational range of the air-conditioning compressor 101 cannot be maintained by simply dividing the heat exchanger capacity, the operational range is maintained by opening the solenoid valve 209 disposed in the bypass circuit 300 so as to allow the refrigerant to bypass the divided heat exchangers. The divided structure may alternatively be controlled by using electronic expansion valves in place of the solenoid valves.

The integrated air-conditioning and hot-water system 100 having the above-described configuration achieves a balance between the heating load and the cooling load performed by the multiple use-side units so as to allow operation with optimal energy efficiency throughout the year. Furthermore, because the integrated air-conditioning and hot-water system 100 is equipped with the freeze protection water pipe 416, the water pipes can be prevented from freezing without being provided with an electric heater or the like, thereby further contributing to the energy-efficient configuration.

### Reference Signs List

1 air-conditioning refrigeration cycle; 2 hot-water-supply refrigeration cycle; 3 hot water load; 3a hot water load; 4 hot-water-supply water circulation cycle; 21 hot-water-supply compressor; 22 hot-water-supply expansion means; 31 water circulation pump; 31a heat-medium circulation pump; 32 hot-water storage tank; 41 refrigerant-refrigerant heat exchanger; 45 refrigerant pipe; 51 heat medium-refrigerant heat exchanger; 100 integrated air-conditioning and hot-water system; 101 air-conditioning compressor; 102 four-way valve; 103 outdoor heat exchanger; 103a divided heat exchanger; 104 accumulator; 105a check valve; 105b check valve; 105c check valve; 105d check valve; 106 high-pressure-side connection pipe; 107 low-pressure-side connection pipe; 108 gas-liquid separator; 109 first distribution unit; 109a valve means; 109b valve means; 110 second distribution unit; 110a check valve; 110b check valve; 111 first internal heat exchanger; 112 first relay-unit expansion means; 113 second internal heat exchanger; 114 second relay-unit expansion means; 115 first junction section; 116 second junction section; 116a second junction section; 117 air-conditioning expansion means; 118 indoor heat exchanger; 119 hot-water heat-source expansion means; 130 first connection pipe; 131 second connection pipe; 132 connection pipe; 133 connection pipe; 133a connection pipe; 133b connection pipe; 134 connection pipe; 134a connection pipe; 134b connection pipe; 135 connection pipe; 135a connection pipe; 135b connection pipe; 136 connection pipe; 136a connection pipe; 136b connection pipe; 201 water-water heat exchanger; 202 water circulation pipe; 203 stored-hot-water circulation pipe; 209 solenoid valve; 300 bypass circuit; 400 outdoor air-conditioning apparatus; 401 intermediate-temperature-range hot-water device; 402 high-temperature-range hot-water device; 403 intermediate-temperature water storage tank; 404 high-temperature water storage tank; 405 hot-water tapping device;
406 hot-water utility room; 407 indoor air-conditioning apparatus; 408 residential space; 410 commercial facility; 411 kitchen; 412 refrigerant pipe; 413 high-temperature supply pipe; 414 intermediate-temperature supply pipe; 415 intermediate-temperature main supply pipe; 416 freeze protection water pipe; 417 intermediate-temperature supply switch valve; 418 freeze-protection-pipe supply valve; 500 architectural structure; A heat source unit; B indoor unit; C indoor unit; D hot-water heat-source circuit; E relay unit.

## Claims

1. An integrated air-conditioning and hot-water system (100) comprising:
at least one heat source unit (A) equipped with at least an air-conditioning compressor (101) and a heat source side heat exchanger (103);
a plurality of indoor units (B, C) connected in parallel to the heat source unit (A) and each equipped with at least a use-side heat exchanger (108);
a plurality of hot-water units (D) connected in parallel to the heat source unit (A) and equipped with at least a refrigerant-refrigerant heat exchanger (41), a heat medium-refrigerant heat exchanger (51), and a hot-water-supply compressor (21); and
at least one relay unit (E) interposed between the heat source unit (A) and the indoor units (B, C) and the hot-water units (D) for transferring heating energy or cooling energy generated in the at least one heat source side unit (A) to the indoor units (B, C) and the hot-water units (D),
**characterized in that**
the system is configured to, at least in the case where the cooling load of the plurality of indoor units (B, C) and the heating load of the plurality of hot-water units exist at once, if the cooling load of the plurality of indoor units (B, C) is large, increase the set temperature of the plurality of hot-water units (D), perform the heating operation, and comprises control means configured to control the plurality of hot-water units (D) to balance a load in the plurality of indoor units (B, C) and a load in the plurality of hot-water units (D).

2. The integrated air-conditioning and hot-water system (100) of Claim 1, wherein different temperature ranges are set for the plurality of hot-water units (D).

3. The integrated air-conditioning and hot-water system (100) of Claim 1 or 2, wherein each hot-water unit is provided with a hot-water storage tank (32) for storing hot water or cold water generated in the hot-water unit, and
wherein a pipe for letting the hot water supplied from at least one of the hot-water storage tanks (32) flow through is disposed around an outer peripheral surface of or inside a pipe for letting the cold water supplied from at least a remaining one of the hot-water storage tanks (32) flow through.

## Patentansprüche

1. Integriertes Klimatisierungs- und Warmwassersystem (100), umfassend:
zumindest eine Wärmequelleneinheit (A), die mit zumindest einem Klimaanlagenkompressor (101) und einem wärmequellenseitigen Wärmetauscher (103) ausgestattet ist;
eine Vielzahl von Inneneinheiten (B, C), die parallel mit der Wärmequelleneinheit (A) verbunden und jeweils zumindest mit einem nutzungsseitigen Wärmetauscher (108) ausgestattet sind;
eine Vielzahl von Warmwassereinheiten (D), die parallel mit der Wärmequelleneinheit (A) verbunden und zumindest mit einem Kältemittel-Kältemittel-Wärmetauscher (41), einem Wärmemedium-Kältemittel-Wärmetauscher (51) und einem Warmwasserzufuhrkompressor (21) ausgestattet sind, und;
zumindest eine Relais-Einheit (E), die zwischen die Wärmequelleneinheit (A) und die Inneneinheiten (B, C) und die Warmwassereinheiten (D) geschaltet ist, um die in der zumindest einen Wärmequelleneinheit (A) erzeugte Wärmeenergie oder Kühlenergie an die Inneneinheiten (B, C) und die Warmwassereinheiten (D) zu übertragen,
**dadurch gekennzeichnet, dass**
das System eingerichtet ist, um zumindest in dem Fall, in dem die Kühllast der Vielzahl von Inneneinheiten (B, C) und die Heizlast der Vielzahl von Warmwassereinheiten gleichzeitig vorhanden ist, wenn die Kühllast der Vielzahl von Inneneinheiten (B, C) groß ist, die Solltemperatur der Vielzahl von Warmwassereinheiten (D)im Vergleich zu dem Fall, in dem die Kühllast der Vielzahl von Inneneinheiten (B, C) klein ist, zu erhöhen und den Wärmebetrieb durchzuführen, und eine Steuereinrichtung umfasst, die eingerichtet ist, um die Vielzahl von Warmwassereinheiten (D) zu steuern, um eine Last in der Vielzahl von Inneneinheiten (B, C) und eine Last in der Vielzahl von Warmwassereinheiten (D) auszugleichen.

2. Integriertes Klimatisierungs- und Warmwassersystem (100) nach Anspruch 1, wobei verschiedene Temperaturbereiche für die Vielzahl von Warmwassereinheiten (D) festgelegt sind.

3. Integriertes Klimatisierungs- und Warmwassersystem (100) nach Anspruch 1 oder 2, wobei jede Warmwassereinheit mit einem Warmwasserspeichertank (32) zum Speichern von in der Warmwassereinheit erzeugtem Warmwasser oder Kaltwasser versehen ist, und
wobei eine Leitung, die das von zumindest einem der Warmwasserspeichertanks (32) zugeführte Warmwasser durchströmen lässt, um eine äußere Umfangsfläche einer Leitung herum oder innerhalb einer Leitung angeordnet ist, welche eingerichtet ist das von zumindest einem verbleibenden der Warmwasserspeichertanks (32) zugeführte Kaltwasser durchströmen zu lassen.

## Revendications

1. Système intégré de climatisation et d'eau chaude (100) comprenant :
au moins une unité source de chaleur (A) dotée au moins d'un compresseur de climatisation (101) et d'un échangeur de chaleur du côté source de chaleur (103) ;
une pluralité d'unités intérieures (B, C) connectées en parallèle à l'unité source de chaleur (A), et dotées chacune au moins d'un échangeur de chaleur du côté utilisation (108) ;
une pluralité d'unités eau chaude (D) connectées en parallèle à l'unité source de chaleur (A), et dotées au moins d'un échangeur de chaleur fluide frigorigène - fluide frigorigène (41), d'un échangeur de chaleur milieu thermique - fluide frigorigène (51), et d'un compresseur d'approvisionnement en eau chaude (21) ; et
au moins une unité relais (E) interposée entre l'unité source de chaleur (A) et les unités intérieures (B, C) et les unités eau chaude (D), pour transférer l'énergie de chauffage ou l'énergie de refroidissement générée dans la ou les unités du côté source de chaleur (A), aux unités intérieures (B, C) et aux unités eau chaude (D),
**caractérisé en ce que**
le système est configuré, au moins dans le cas où la charge de refroidissement de la pluralité d'unités intérieures (B, C) et la charge de chauffage de la pluralité d'unités eau chaude existent en même temps, si la charge de refroidissement de la pluralité d'unités intérieures (B, C) est grande, pour augmenter la température de réglage de la pluralité d'unités eau chaude (D), exécuter l'opération de chauffage, et comprend des moyens de commande configurés pour commander la pluralité d'unités eau chaude (D) pour équilibrer une charge dans la pluralité d'unités intérieures (B, C) et une charge dans la pluralité d'unités eau chaude (D).

2. Système intégré de climatisation et d'eau chaude (100) selon la revendication 1 :
où différentes plages de températures sont fixées pour la pluralité d'unités eau chaude (D).

3. Système intégré de climatisation et d'eau chaude (100) selon la revendication 1 ou 2 :
où chaque unité eau chaude est dotée d'un réservoir de stockage de l'eau chaude (32) destiné à stocker l'eau chaude ou l'eau froide générée dans l'unité eau chaude, et
où une canalisation destinée à permettre à l'eau chaude, fournie à partir de l'un au moins des réservoirs de stockage de l'eau chaude (32), de circuler, est disposée autour d'une surface périphérique extérieure d'une canalisation, ou à l'intérieur d'une canalisation, pour permettre à l'eau froide, fournie à partir de l'un au moins des autres réservoirs de stockage de l'eau chaude (32), de circuler.
